# EUROPEAN PATENT APPLICATION

(11) **EP 1 089 409 A1**
(43) Date of publication of application: **04.04.2001**
(21) Application number: 00402479.0
(22) Date of filing: 08.09.2000
(51) Int. Cl.: H02G 1/12, G02B 6/14, G02B 6/44

(54) **Access tool for optical fiber assemblies and methods to use the same**

(30) Priority: 29.09.1999 US 408077
(71) Applicant: ALCATEL, 75008 Paris (FR)
(72) Inventor: Meisch, Christophe, Newton, North Carolina 28658 (US)
(74) Representative: Cabinet Hirsch

(57) **Abstract**

The access tool includes a housing (10) and a block (20) disposed within the housing. The housing has side walls (12) connected by a bottom wall (15) thereby forming a channel (11). The block is disposed within the channel so as to be slidable along the longitudinal axis of the housing, as well as to be movable toward and away from the bottom wall so that the tool may be used on a wide range of optical conductor sizes. The block includes at least one projection (28) which is disposed in at least one groove (13) in the housing so as to connect the block and housing in a simple manner.

To separate a sheath from an optical conductor, the optical conductor is placed within the channel, and then the block is moved toward the bottom wall to squeeze the optical conductor. The optical conductor is then pulled relative to the access tool thereby separating the sheath from the fibers in the optical conductor.

## Description

### BACKGROUND

### 1. Field of the Invention

The present invention relates to an access tool for removing a sheath or covering from a conductor and, more particularly, to a tool for removing the sheath from a fiber optic conductor to gain access to the optical fibers within the conductor. Further, the invention relates to a tool for removing a portion of a buffer tube that houses one or more optical fibers, for removing a portion of a cured-resin optical fiber ribbon, or even for opening a low fiber count cable.

### 2. Related Art

The related art includes various tools for accessing optical fibers within a buffer tube or the like. Typical access tools are disclosed in US Patent Nos.: 4,972,581; 5,140,751; 5,577,150; and 5,822,863. However, in these typical access tools, there are many easily removable parts which tend to get separated when in use in the field. Further, these typical access tools have a complicated design which makes them difficult to assemble and/or adjust, as well as difficult and expensive to manufacture. Further still, these typical tools are usable with a very limited range of buffer tube, or ribbon, sizes.

### SUMMARY OF THE INVENTION

An object of the present invention is to provide an access tool which overcomes the disadvantages of the prior art. More particularly, an object of the present invention is to provide an access tool which is lightweight, compact, and simple to use. Further, the access tool easily can be used on many different sized fiber optic conductors without complicated adjustments. The fiber optic conductor can be, for example, a flextube having a buffer tube which surrounds a plurality of optical fibers, or an optical fiber ribbon. Another object is to provide an access tool which, because of its simplicity, can be manufactured easily and at a low cost. The access tool of the present invention can be used to remove the buffer tube, or matrix material of a ribbon, either at midspan or at an end thereof.

### BRIEF DESCRIPTION OF THE DRAWINGS

The above and other objects and advantages of the present invention will become more apparent by describing in detail preferred embodiments thereof with reference to the accompanying drawings, wherein like reference numerals designate like or corresponding parts throughout the several views, and wherein:
Figure 1 is an exploded perspective view of an access tool, including a housing and a block, according to the present invention;
Figure 2 is an end view of the access tool's block shown in Figure 1;
Figure 3 is an end view of the access tool's housing shown in Figure 1;
Figure 4 is a side view of the block as shown in Figure 2;
Figures 5A-C are cross sectional views, as taken along line V-V of Figure 3, of the housing, wherein Figure 5A shows the groove as depicted in Figures 1 and 3, whereas Figures 5B and 5C show modified versions of the groove; and
Figure 6 is a schematic side view of an access tool according to a second embodiment of the present invention.

### DETAILED DESCRIPTION OF THE INVENTION

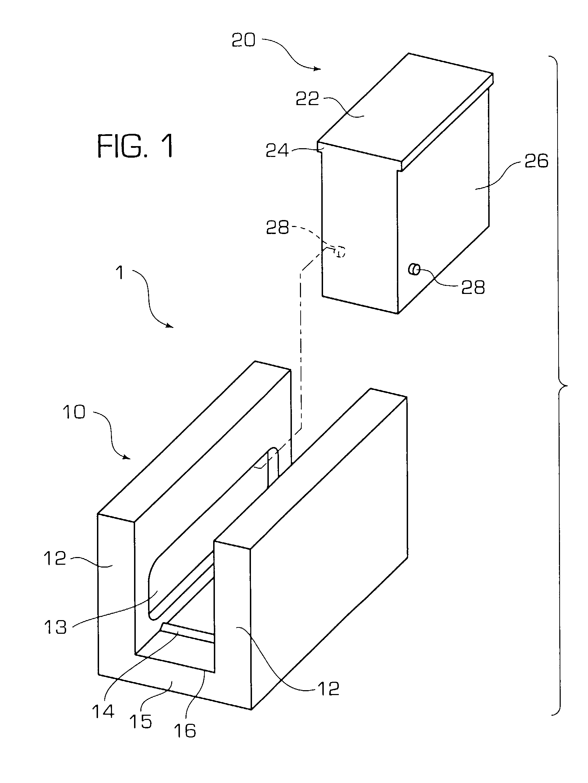

As shown in Figure 1, the access tool 1 according to the present invention has a simple design which is easy to manufacture and use. Further, the access tool is lightweight and compact. The access tool 1 includes only two main parts: a housing 10; and a block 20. The housing 10 includes a U-shaped channel 11 therein, and the block 20 fits within the channel 11. The block is slidable within the channel, and is movable toward and away from the bottom of the channel 11. Because the access tool only contains two main parts which are of a simple design, it can be easily manufactured by injection molding, for example.

Further, because the tool only contains two main parts, it is very simple to use. To use the tool, a fiber optic conductor is placed in the bottom of the channel 11, and then the block 20 is slid into position over the conductor. The housing 10 and block 20 are then simply pressed together so as to sandwich the conductor between them. The conductor flattens between the bottom of the channel 11 and the bottom of the block 20 so that the housing 10 and block 20 firmly grip the buffer tube, or ribbon matrix, of the optical conductor. The optical conductor is then pulled, or twisted and then pulled, relative to the access tool 1 to thereby separate a section of the buffer tube, or ribbon matrix, from the optical conductor. Two access tools may be used to grip and pull the optical conductor, or the optical conductor may be pulled by hand relative to one access tool which grips the optical conductor.

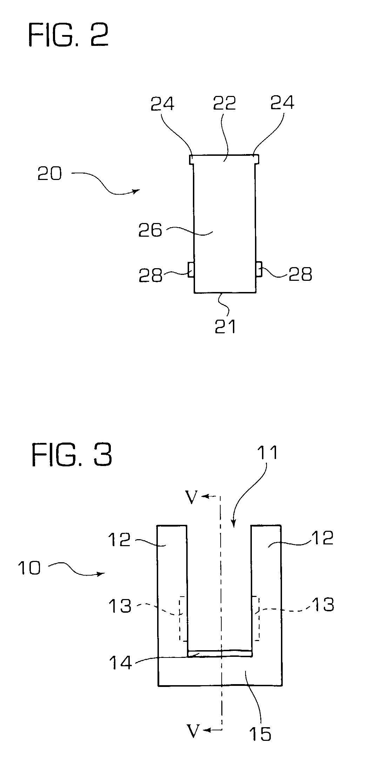

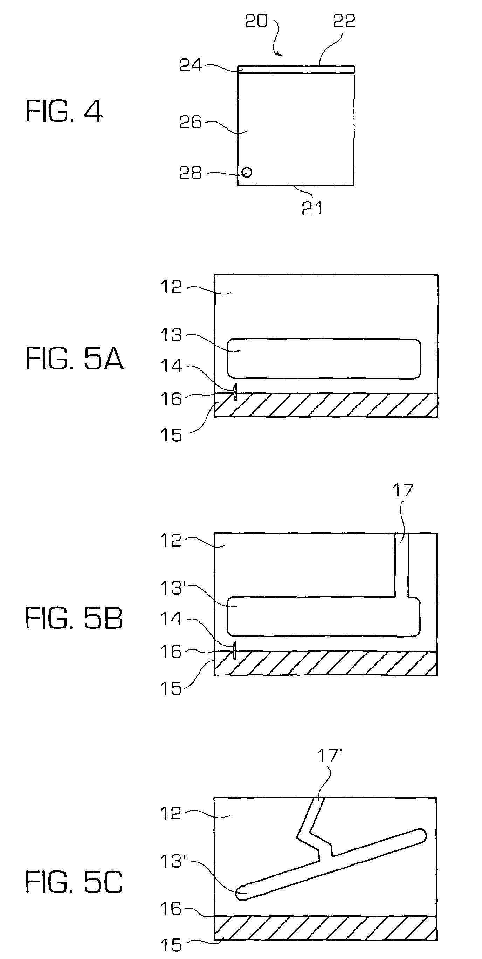

The two main parts of the access tool will now be described with reference to Figures 1-5. The housing 10 and block 20 may be either permanently attached to one another, or may be separable from one another, as described below. Therefore, the housing 10 and block 20 are shown in separate figures. Figures 3 and 5 depict the housing 10 without the block 20, whereas Figures 2 and 4 depict the block 20 without the housing 10.

The housing 10 includes two side walls 12 and a bottom wall 15. The walls 12 and 15 are connected with one another so as to from a U-shaped channel 11 as best shown in Figures 1 and 3. The U-shaped channel is sized so as to accommodate a large range of optical conductor sizes in both their initial, and flattened, configurations. As a non-limiting example, the housing can be about 3-10 cm long, and the U-shaped channel can be slightly wider than 24-fiber width. In each of the side walls, there is disposed a groove 13 for receiving and retaining the later-described projections 28 on block 20.

The grooves 13 are similar to one another and, therefore, only one is shown in the cross-sectional views of Figure 5. Each groove 13 is formed in a respective side wall 12, slightly above the bottom wall 15. Further, each groove is elongate in shape and extends from one end of the housing 10 toward the opposite end.

A blade 14 may be disposed in the bottom wall 15 so as to extend into the channel 11. The blade 14 is set back from a front edge 16 of the bottom wall so that it does not accidentally come in contact with a user, but contacts an optical conductor within the channel 11 to facilitate separation of the optical conductor's outer coating, i.e., separation of the buffer tube from the flextube, or separation of the ribbon matrix from the ribbon's optical fibers. Alternatively, or in addition, to the blade 14 on the housing 10, a blade (not shown) may be disposed on the bottom of the block 20.

The block 20 includes a body 26 having a bottom 21 and a top 22. A lip 24 is disposed on opposite sides of the body's top 21. The lip 24 provides a greater surface area for a user to press and, therefore, makes the tool more comfortable to operate over extended periods of time. Toward the bottom, and one end, of the block 20 are disposed projections 28. The projections 28 extend from opposite sides of the body 26 so to be engagable with the grooves 13. Although the projections 28 are shown as being cylindrical, they may be of any suitable shape. For example, the projections may have a cube, or any other polyhedral, shape. Further, the projections may be made monolithic with the block 20, as by injection molding, or may be formed by a pin extending through the block 20.

The block 20 and housing 10 are configured and dimensioned so that they can move relative to one another along the longitudinal axis of the tool, as well as perpendicular thereto, i.e., so that the block 20 can move along the channel 11 as well as toward and away from the bottom wall 15.

In order to allow the block 20 to slide along the channel 11, in a direction parallel to the long axis of the tool, the body 26 is sized and shaped so that it fits in the U-shaped channel with little clearance between it and the side walls 12. The side walls 12 thus guide the movement of the block 20. Further, the projections 28 extend from the body to an extent slightly less than the extent to which the grooves 13 extend into the side walls 12 to thereby prevent the projections from binding on the housing 10. Thus, when the projections are disposed within the grooves 13, the block 20 is securely attached to the housing 10, yet is easily slidable along the long axis of the housing.

The block 20 is also movable toward and away from the bottom wall 15 so that the access tool can accommodate a wide variety of optical conductor sizes. The grooves 13 and projections 28 are configured and dimensioned to provide for this type of movement of the block relative to the housing bottom wall 15.

In the embodiments shown in Figures 5A and 5B, the height of the grooves 13 is set to be larger than the diameter of the projections 28. Thus, the projections 28 can move from the bottom of the grooves 13, 13' to the top of the grooves, i.e., the projections can move up and down within the grooves. Thus, even with the projections received in the grooves, the block 20 can be moved toward and away from the bottom wall 15 to accommodate a wide range of optical conductor sizes. The block 20 is movable toward and away from the bottom wall 15 over the length of the U-shaped channel 11, including the portion in which the blade 14 is located. Therefore, the block 20 can slide over the top of even a large diameter optical conductor, and then press that conductor on the blade 14 to facilitate separation of the buffer tube, or matrix material, from the optical fibers.

Further, the projections 28 and grooves 13 are configured and dimensioned with respect to the block 20 and housing 10, respectively, so that when the projections 28 are pressed to engage the bottom of the grooves 13, a gap is formed between the bottom 21 of the block 20 and the bottom wall 15. The gap is sized to minimize any crushing of the optical fibers within the optical conductor, yet is also sized so that the access tool firmly grips the optical conductor's outer casing.

As noted above, the housing 10 and block 20 may be either permanently connected to one another, or may be separable. The grooves 13, which receive the projections 28, can be simply formed so as to produce either arrangement.

As shown in Figure 5A, the groove 13 is contained entirely within the side wall 12. That is, the groove 13 does not extend to the outer edge of the side wall 12, whereby once the block is fitted into the housing with the projections 28 in the grooves 13, the block and housing are not separable. With this arrangement, the block 20 is permanently attached to the housing 10 and does not get lost during use in the field. Thus, all of the tool's parts are conveniently connected together so that the user does not need to look for and assembly different parts in order to access optical fibers within an optical conductor.

In an alternative embodiment, shown in Figure 5B, each groove 13' is in communication with an exit groove 17 so as to enable the block 20 to be separated from the housing 10. This embodiment facilitates midspan access, yet still keeps the parts of the tool conveniently together. Although the block 20 is separable from the housing 10, it is not accidentally separated easily. The positioning of exit groove 17 forces the user to make a deliberate movement to separate the block 20 from the housing 10.

In the embodiment of Figure 5B, the projections 28 of the block 20 are received in grooves 13' of the housing 10. The grooves 13' are similar in configuration and operation to the grooves 13 and, therefore, will not be described in detail. However, in this embodiment, the exit grooves 17 allow the projections 28 of the block to exit the housing 10. That is, the block 20 can be slid in the channel 11 until the projections 28 are aligned with the exit grooves 17. The block 20 can then be lifted so that the projections follow the grooves 17 and are released from the housing 10. Although the block 20 and housing 10 are separable, the exit grooves 17 are positioned and configured so as to minimize accidental separation of the block 20 and housing 10. That is, the exit grooves 17 are positioned away from the longitudinal ends of the grooves 13'. Because the exit grooves 17 are so positioned, they are not aligned with the projections 28 when the block 20 is slid to either extreme end of the channel 11. This means that a deliberate action must be taken to align the projections 28 with the exit grooves 17; alignment will not occur merely by sliding the block 20 to either end of the channel 11. Further, the exit grooves 17 extend toward the top of the housing 10, as opposed to the back of the housing 10, thereby providing a long distance over which the projections must travel before exiting the housing. Further, the exit grooves 17 could include a bend, or be oblique to the grooves 13', thereby making it even more difficult to accidentally separate the block 20 from the housing 10.

Because the block 20 and housing 10 can be separated, however, they can be easily disposed around the middle of a long optical conductor for midspan access. That is, after the block 20 and housing 10 are separated, the middle portion of the optical conductor is placed within the housing. The block 20 is then reattached to the housing 10 by guiding projections 28 down exit grooves 17 and back into grooves 13'. The access tool is then used as previously described.

In another alternative embodiment, shown in Figure 5C, each groove 13" is shaped so as to have a top portion which is oblique to the bottom wall 15 of the housing. This arrangement facilitates quick adjustment of the access tool so as to accommodate different sized optical conductors. That is, the oblique groove 13" provides for movement of the block 20 toward, and away from, the bottom wall 15 of the housing by merely sliding the block 20 back and forth within the channel 11. In this embodiment, then, different sized optical fibers will be engaged between the block 20 and bottom wall 15 at different positions along the length of the U-shaped channel 11. Therefore, this embodiment preferably does not include a blade in the bottom wall so as to avoid cutting the optical conductor at an undesired position. The groove 13" is configured and dimensioned relative to the position of the projections 28 on block 20 so that when the block is at the end of the groove closest to the front edge 16, the block 20 is still positioned from the bottom wall 15 by a gap. This gap is sized to minimize any crushing of the optical fibers within the smallest-sized optical conductor usable with the tool, yet so that the access tool firmly grips the optical conductor's outer casing.

The embodiment of Figure 5C can also include exit grooves 17', similar in configuration and operation to those described in connection with Figure 5B, to facilitate midspan access.

In each of the embodiments described in connection with Figures 5A-C, the configuration and dimension of the grooves 13, 13', 13", easily determines the range of optical conductor sizes on which the tool may be used. That is, by making the grooves 13, 13' taller, larger optical conductors can fit between the block 20 and the bottom wall 15. Similarly, by making the grooves 13, 13' shorter, the range of optical conductors on which the tool can be used, is limited. Further, by increasing the angle between the groove 13" and the bottom wall 15, larger optical conductors can be fit in the U-shaped channel 11. Similarly, by decreasing the angle between the groove 13" and the bottom wall 15, the range of optical conductor sizes on which the tool may be used is, again, limited. Accordingly, of course, the U-shaped channel 11 can be sized so as to accommodate the larger optical conductors, even when the conductors are flattened between the block 20 and bottom wall 15. Preferably, however, the grooves are configured and dimensioned to allow use of the tool on a wide range of optical conductor sizes.

Additionally, the gap size in each of the above embodiments can easily be varied by changing the relative distances between: the bottom wall 15 and the closest portion of the grooves 13, 13', 13"; as well as the distance between the bottom 21 of the block 20, and the projections 28.

Moreover, in each of the embodiments of Figures 5A-C, the block 20 is able to slide longitudinally within the housing, as well as is able to move toward and away from the bottom wall 15. Therefore, the access tool of the present invention allows an optical conductor to easily be placed therein, while remaining compact.

The housing and block may be made of any suitable material, although plastic is preferred because it is easy to mold, is inexpensive, and light-weight. Also, although the channel 11 is described as being U-shaped, any suitable shape may be used. Further, although the access tool is described as having a blade 14, such is not necessary. The pressure generated by just squeezing the optical conductor between the block 20 and bottom wall 15 of housing 10 is sufficient to separate a buffer tube, or ribbon matrix, from the optical conductor when pulled with the tool. The tool may be used on any type of sheathing used in optical conductors, including thermoplastics and UV curable resins. Further, the optical conductor may be filled with water swellable gel or dry powder or fiber, and the access tool is still effective thereon. Further, although the housing 10 is described as having two grooves, and the block is described as having two projections 28, the access tool could include only one groove and one corresponding projection.

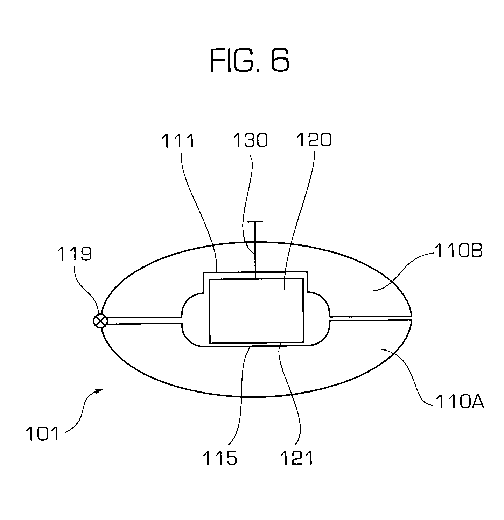

A second embodiment of the access tool will now be described with reference to Figure 6. Reference numerals similar―i.e., having 100 added thereto―to those in Figures 1-5 are used to designate similar elements. The access tool 101 of the second embodiment includes a two-piece housing―with first and second housing halves 110A and 110B―and a block 120.

The housing halves 110A and 110B are hinged to one another by hinge member 119. The first housing half 110A includes a bottom wall 115, whereas the second housing half 110B includes a channel 111. The bottom wall 115 presents a surface against which an optic conductor may be squeezed. The channel 111 accommodates the block 120 in a sliding manner. But the channel 111 is sized and shaped relative to the block 120 so that the block 120 cannot rotate within the channel 111. The housing halves 110A and 110B pivot with respect to one another around hinge 119 so that they may be disposed in an open and a closed configuration. The closed configuration is shown in Figure 6. In the open configuration, an optic conductor may be placed on bottom wall 115. When the housing halves 110A and 110B are then closed, the block 120 squeezes the optic conductor against the bottom wall 115 as in the previous embodiment.

The block 120 includes a bottom surface 121 which is disposed opposite the bottom wall 115 when the housing halves 110A and 110B are in their closed configuration. It is the bottom surface 121 which acts together with the bottom wall 115 to squeeze the optic conductor. The block 120 is connected to the second housing half 110B by a screw member 130. The screw member is attached to the block 120 so that it moves the block 120 within the channel 111. The specific connection between the screw member 130 and the block 120 may be of any type known in the art. The screw member 130 is used to adjust the space between the bottom surface 121 and the bottom wall 115 and, thereby, easily adjust the access tool to the size of optic conductor to be accessed. By rotating the screw member 130 in one direction, the bottom surface 121 of the block 120 moves closer to the bottom wall 115 to thereby accommodate a smaller optic conductor. Similarly, by rotating the screw member 130 in the opposite direction, the bottom surface 121 of the block 120 moves away from the bottom wall 115 to thereby accommodate a larger optic conductor.

Because the housing halves 110A and 110B are hinged together, and because the screw member connects the block 120 to the housing half 110B in a sliding manner, the parts of the tool are conveniently held together for use. That is, the parts of the tool will not be separated from one another, and lost, during use in the field. Further, the access tool of the second embodiment has few parts which thereby simplifies its production and use. Yet the tool easily accommodates a wide range of optic conductor sizes. The tool of the second embodiment is used in a manner similar to that of the first embodiment and, therefore, its use will not be described in detail. However, it should be noted that the second embodiment more easily accommodates midspan access than does the first embodiment because the parts of the tool do not need to be temporarily separated, as in the first embodiment. That is, the hinge 119 keeps the housing halves 110A and 110B connected together, yet allows them to rotate relative to one another so that the midspan of the optic conductor can be placed on the bottom wall 115. The housing half 110A may include a blade similar to the blade 14 of the first embodiment. Alternatively, or in addition thereto, the block 120 may also include a blade similar to the blade 14 of the first embodiment.

It is contemplated that numerous modifications may be made to the access tool of the present invention without departing from the spirit and scope of the invention as defined in the following claims.

## Claims

1. An access tool comprising:
- a housing (10) having a longitudinal axis, side walls (12), and a bottom wall (15) connecting said side walls, said housing further including at least one groove (13) in one of the side walls; and
- a block (20) having a top (22), a bottom (21), and a body (26) extending between said top and said bottom, said block further including at least one projection (28) extending from said body, wherein said at least one projection is disposed in said at least one groove.

2. The access tool of claim 1, wherein said side walls and said bottom wall form a U-shaped channel (11), and wherein said block is disposed at least partially within said U-shaped channel.

3. The access tool of claim 1 or 2, further comprising a blade (14) in at least one of said bottom wall (15) and said block (20).

4. The access tool of one of claims 1 to 3, wherein said at least one groove (13) has a length extending along said longitudinal axis, and a height substantially perpendicular to said longitudinal axis,
wherein said at least one projection (28) includes a height extending in a direction parallel to that extending between said top and said bottom of said block, and
wherein said height of said at least one groove is greater than said height of said at least one projection.

5. The access tool of one of claims 1 to 4, wherein said at least one groove (13) includes a bottom that is disposed at a first minimum distance above said bottom wall (15), wherein said at least one projection (28) is disposed at a second distance above said bottom (21) of said block, and wherein said first distance is greater than said second distance.

6. The access tool of one of claims 1 to 5, wherein said at least one groove (13") is oblique to said bottom wall.

7. The access tool of one of claims 1 to 6, further comprising at least one exit groove (17, 17') in at least one of said side walls (12), wherein said at least one exit groove is in communication with said at least one groove (13) and an outer edge of said at least one side wall.

8. The access tool of claim 7, wherein said at least one exit groove (17") includes at least one bend.

9. The access tool of claim 7 or 8, wherein said at least one exit groove communicates with said at least one groove at a position other than a longitudinal end of said at least one groove.

10. The access tool of one of claims 1 to 9, further comprising a lip (24) disposed on said top of said block (20) and projecting from said body (26) of said block.

11. The access tool of one claim 1 to 10, wherein said at least one projection (28) is monolithic with said body of said block.

12. The access tool of one of claims 1 to 11, wherein said at least one groove (13) includes one groove on each side wall (12), and wherein said at least one projection (28) includes one projection disposed in each groove.

13. A tool for accessing optic conductors, comprising:
- a housing having a channel (111) and a first wall (115); and
- a block (120) having a first surface (121), said block being connected to said housing so that said first surface opposes and is movable relative to said first wall so as to form a space for accommodating an optic conductor.

14. A tool according to claim 13, wherein said housing includes a first housing half (110A), a second housing half (110B), and a hinge member (119) which connects said first housing half to said second housing half.

15. A tool according to claim 13 or 14, wherein said block (120) is disposed in said channel (111).

16. A tool according to claim 15, further comprising a screw member (130) rotatably connected to said housing (110B) and connected to said block (120) so that said screw member causes said block to slide within said channel as said screw member rotates relative to said housing.

17. A tool according to one of claims 13 to 16, wherein said housing further includes side walls connected to said first wall (115), and said housing further includes at least one groove in one of the side walls.

18. A tool according to claim 17, wherein said block (120) includes a top, and a body extending between said top and said first surface of said block, said block further including at least one projection extending from said body, and said at least one projection is disposed in said at least one groove.

19. A method of separating a sheath from an optical conductor, comprising:
- squeezing an optical conductor, with a first access tool according to one of claims 13 to 18, between said block (120) and said bottom wall (115) of said access tool,
- pulling said optical conductor relative to said access tool.

20. The method according to claim 19, wherein said step of squeezing includes squeezing said optical conductor at a midspan thereof.

21. The method according to claim 19 or 20, further comprising twisting the optical conductor relative to said access tool before said step of pulling.

22. The method according to claim 19 or 20, further comprising twisting the optical conductor relative to said access tool during said step of pulling.

23. The method according to one of claims 19 to 22, wherein said step of pulling comprises squeezing said optical conductor, with a second access tool according to one of claims 1 to 12, and pulling said second access tool relative to said first access tool.
